Europäisches Patentamt

(19) European Patent Office

Office européen des brevets

(11) Publication number : **0 541 672 B1**

(12) **EUROPEAN PATENT SPECIFICATION**

(45) Date of publication of patent specification :
09.02.94 Bulletin 94/06

(51) Int. Cl.⁵ : **G01N 19/10**

(21) Application number : **91914412.1**

(22) Date of filing : **26.07.91**

(86) International application number :
**PCT/DK91/00216**

(87) International publication number :
**WO 92/02801 20.02.92 Gazette 92/05**

(54) **AN AIR-HUMIDITY INDICATOR AND A METHOD OF MAKING A HUMIDITY-SENSITIVE STRIP FOR SAME.**

(30) Priority : **31.07.90 DK 1825/90**

(43) Date of publication of application :
**19.05.93 Bulletin 93/20**

(45) Publication of the grant of the patent :
**09.02.94 Bulletin 94/06**

(84) Designated Contracting States :
**AT BE CH DE DK ES FR GB GR IT LI LU NL SE**

(56) References cited :
**DE-C- 179 706**
**US-A- 2 534 279**

(73) Proprietor : **DANSK TEKNOLOGISK INSTITUT
Gregersensvej
DK-2630 Taastrup (DK)**

(72) Inventor : **OLSEN, Lars
Fuglegardsvej 4
DK-2820 Gentofte (DK)**
Inventor : **FREDERIKSEN, Erik
Stenbukvej 34 Ejby
DK-4623 Lille Skensved (DK)**

(74) Representative : **Roerboel, Leif et al
BUDDE, SCHOU & CO. A/S Sundkrogsgade 10
DK-2100 Copenhagen O (DK)**

## Description

TECHNICAL FIELD

The present invention relates to an air-humidity indicator of the kind set forth in the preamble of claim 1.

BACKGROUND ART

In indicators of this kind, it is known to utilize the ability of the hygroscopic substance to absorb water from the air to obtain various visible effects, such as a change of colour of a carrier substance or a change in electrical conductivity. These effects are not always convenient to use, especially when measuring the relative humidity at a great number of points in a building structure, such as a concrete floor, where it is necessary to ascertain the degree of relative humidity in order to determine whether the material in question is suitable for receiving glue or cement used for securing a covering, such as a fixed carpet or linoleum, to the structure. Thus, the relatively large number of indicators necessary will often make the process of examining the relative humidity mentioned prohibitively costly, and in other cases difficulties may arise in interpreting the visual effects observed, especially when using colour changes.

DISCLOSURE OF THE INVENTION

It is the object of the present invention to provide an air-humidity indicator of the kind referred to initially, that may be produced at a very low cost, while the visual effects are easy to observe and interpret, and this object is achieved with an air-humidity indicator of the kind referred to above, which according to the present invention is characterised by the features set forth in claim 1.

With this arrangement, the moisture absorbed from the air by the hygroscopic substance will weaken the fold or folds, so that the constantly acting force will straighten or unfold the strip in an easily observable manner.

Advantageous embodiments of the indicator according to the present invention, the effects of which are explained in the following detailed portion of the present specification, are set forth in claims 2-9.

The present invention also relates to a method of producing a humidity-sensitive strip for use in an indicator according to the present invention, and this method is characterised by the steps set forth in claim 10.

BRIEF DESCRIPTION OF THE DRAWINGS

In the following detailed specification, the present invention will be explained in more detail with reference to the exemplary embodiment of a humidity indicator shown in the drawing, in which

Figure 1 is a longitudinal sectional view through the indicator in its state before use, carrying a protective cap,

Figure 2 is a cross-sectional view taken along the line II-II in Figure 1, and

Figure 3 is a longitudinal sectional view of the indicator in use for determining the relative humidity in a concrete floor, said section being taken along a plane at right angles to the sectional plane of Figure 1.

DESCRIPTION OF THE PREFERRED EMBODIMENT

The humidity indicator shown in the drawing consists of a tube 1 made of transparent material, such as acrylic resin or the like. The tube 1 is open at one end, whilst the other end is closed in an air-tight and vapour-tight manner by an end wall 2, the latter preferably being integral with the tube 1.

A paper strip 3 is secured to the end wall 2, in the example shown by being inserted through a slit in the latter and cemented to same by means of suitable cement or glue 4. The paper strip 3 is folded in zig-zag fashion, thus exhibiting a number of transverse folding lines 5.

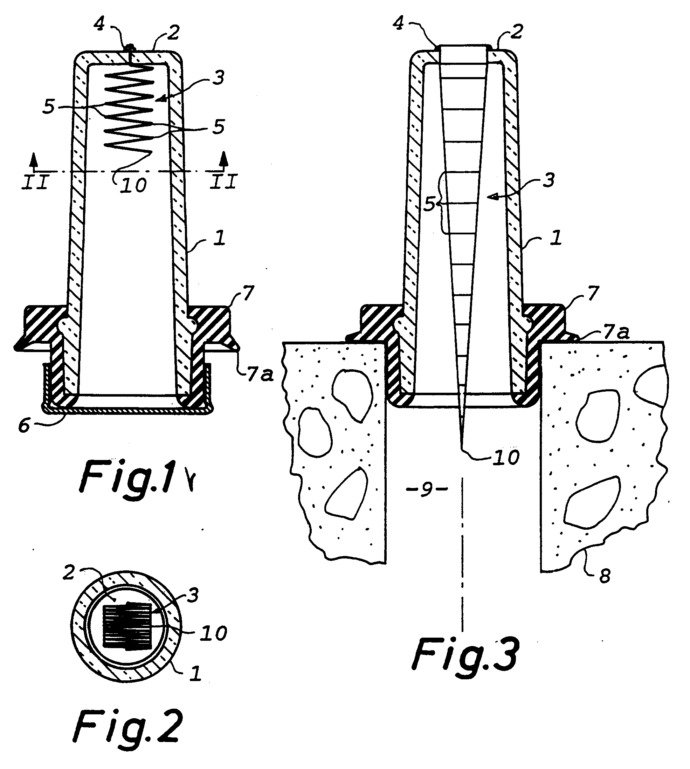

The paper strip 3 consists of a type of paper, in which the fibres adhere to each other by means of an adhesive that may be dissolved or at least softened by water, normal fine tissue paper having proved suitable. Before being inserted in the tube 1 in the manner shown in Figure 1, the paper strip 3 has been treated in the following manner:

- first, the paper strip or the material, from which it is made, is impregnated with a solution of a hygroscopic substance capable of absorbing water from the air having at least a predetermined degree of humidity, after which the paper is dried before the impregnating solution has dissolved the adhesive holding the fibres together,
- the paper thus having been impregnated and dried is folded in zig-zag fashion in the manner indicated in Figure 1,
- the paper being cut into strips at some suitable time before, during or after the above impregnating, drying and folding steps.

As soon as the impregnated, dried and zig-zag folded paper strip 3 has been placed in the tube 1 in the position shown in Figure 1 and secured to the end wall 2, the open end of the tube 1 is closed in an air-tight and vapour-tight manner by means of a cap 6 cooperating sealingly with an annular sealing flange 7 made of resilient rubber or plastics material, that extends around the open end of the tube 1, said sealing flange having a peripheral sealing lip 7a.

When the humidity indicator is to be used for measuring the humidity in e.g. a concrete floor 8, of which but a tiny part is shown in Figure 3, a hole 9 is drilled into the concrete floor 8, after which the cap 6 is removed from the sealing flange 7 and the tube 1 is placed in continuation of the hole 9 as shown in Figure 3 with the sealing flange 7 with its sealing lip 7a making an air-tight and vapour-tight joint between the tube 1 and the concrete floor 8.

After a short period of time, a humidity equilibrium will be established between the space in the hole 9 and the space in the tube 1, and if the degree of humidity is sufficient to liquefy the hygroscopic substance, with which the paper strip 3 has been impregnated, water will be absorbed from the atmosphere inside the tube 1 and soften or dissolve the adhesive holding the fibres of the paper strip 3 together, thus reducing the bending strength of the paper at the folding lines 5 to such an extent, that the mere weight of the paper strip and of the water having been absorbed will cause the paper strip 3 to unfold at least partly as shown in Figure 3, thus clearly indicating to an observer that the humidity in the region of the concrete floor around the hole 9 is equal to or exceeds the liquefaction threshold for the hygroscopic substance being used. In cases where the test hole 9 is more or less horizontal instead of vertical as shown in Figure 3, the inherent elasticity of the paper fibres has proved sufficient to effect at least a partial straightening of the strip 3 when influenced by the absorbed moisture, thus providing the requisite visible effect. Thus, the constantly acting unfolding force may be the force of gravity, the inherent elasticity of the paper in the folding lines 5, or a force exerted by some external means (not shown).

At shown in Figure 3, the paper strip 3 is tapered along straight-line edges to an end point 10. With this shape of the paper strip 3, the ratio between the length of each folding line 5 and the weight of the paper below it will be substantially constant, so that the "opening angle" will be substantially the same at all folding lines.

As mentioned above, fine tissue paper has proved suitable for use in making the paper strip 3, but it could also be possible to use other fibrous web materials, such as so-called cigarette paper, nonwoven fabric or the like, two essential conditions being
- that the adhesive holding the fibres together may be dissolved or softened by water, and
- that the material is sufficiently thin to unfold at least partly, when said adhesive is being dissolved or softened by moisture having been absorbed by the hygroscopic substance.

The following table shows examples of relatively harmless hygroscopic salts that may be used as the hygroscopic substance, with which the paper strip 3 is impregnated.

## TABLE

| | Liquefies at rel. hum. (20°C) | Ml $H_2O$ supplied to liquefy 100 g salt (0-20°C) |
|---|---|---|
| Anhydrous copper chloride | 68.4% | 142 |
| Dihydrate of copper chloride | 68.4% | 90.6 |
| Sodium chloride | 75.5% | 280 |
| Ammonium sulphate | 81.0% | 142 |
| Potassium chloride | 86.0% | 288 |
| Potassium nitrate | 93.2% | 752 |
| Potassium sulphate | 97.1% | 833 |

If the humidity indicator made ready for use as shown in Figure 1 is to be stored for a considerable length of time before use, a cartridge or bag containing a drying agent, such as silica gel, may be placed inside the tube 1 before closing it with a cap 6. Another possibility is to place the whole humidity indicator, either singly or in a small or large number, in an air-tight and vapour-tight container also containing a suitably dimensioned portion of such drying agent. In the first-mentioned case, in which a drying agent is placed inside the tube 1, care should be taken to avoid the drying agent contacting the paper strip 3; this could suitably be achieved by securing the cartridge or bag containing the drying agent to the inside of the cap 6.

The paper strip 3 may have any suitable size, but is preferably about 1.5 mm wide, narrowing to zero at the end point 10, in which case it is preferably about 20 mm long. If so, the total length of the tube 1 with cap 6 would be about 13 mm and the insertion diameter of the sealing flange 7 about 5 mm, thus requiring a test hole 9 of only 5 mm in diameter.

## Claims

1. An air-humidity indicator of the kind, in which the effect is based on a hygroscopic substance, which when acted upon by air with at least a predetermined degree of humidity absorbs water from the air and is dissolved in said water, **characterized** in that said hygroscopic substance is carried by a strip (3) of fibrous web material, e.g. paper, in which the fibres adhere to each other by means of an adhesive, that may be dissolved or softened by water, said strip (3) being secured (4) solely at one of its ends or edges and comprising at least one sharp fold (5) between said end or edge and the opposite, free end or edge (10), said fold or folds (5) at least in the operative position of the indicator being acted upon by a force acting constantly in the unfolding direction.

2. An indicator according to claim 1, **characterized** in that the fibrous material is fine tissue paper, cigarette paper or the like.

3. An indicator according to claim 1 or 2, **characterized** in that said hygroscopic substance is selected from the group of salts comprising anhydrous copper chloride, dihydrate of copper chloride, sodium chloride, ammonium sulphate, potassium chloride, potassium nitrate and potassium sulphate.

4. An indicator according to any one or any of the claims 1-3, **characterized** in that the strip (3) with one of

4

its ends or edges is secured to the inside of an end wall (2) or side wall of an at least partly transparent container (1), the length or width of which is of the same order of magnitude as the length or width respectively of the strip in the unfolded state of the latter.

5. An indicator according to claim 4, **characterized** in that said container (1) is formed as a tube closed at one end, in which one end of the strip (3) is secured to the inside of the closed end (2) of the tube.

6. An indicator according to claim 5, **characterized** in that said strip (3) is tapered, being secured at its widest end.

7. An indicator according to claim 6, **characterized** in that the strip (3) tapers to a point at its free end (10).

8. An indicator according to any one or any of the claims 5-7, **characterized** by an annular gasket or seal (7) placed on the outside of the tube at or adjacent to the latter's open end, said gasket or seal having such a shape, that when the tube is inserted in a circular opening (9) in e.g. a concrete floor (8), it seals the tube against the wall of the opening and/or the external surface of said floor (8).

9. An indicator according to any one or any of the claims 1-8, **characterized** in that it is adapted to be sealed in an airtight manner from the surroundings, either by the container (1) being provided with a removable, moisture-proof seal (6), or by the container (1) being placed in a moisture-proof bag, package or container, which may be opened without damaging the humidity indicator, and that may contain a drying agent, e.g. silica gel.

10. A method of producing a humidity-sensitive strip (3) for use in an indicator according to any one or any of the claims 1-9, **characterized** by the following steps a-c:
    a) fibrous web material, e.g. paper, of a kind in which the fibres adhere to each other by means of an adhesive, that may be dissolved or softened by water, is immersed in a solution of a hygroscopic substance of the kind, which when acted upon in its dry state by air with at least a predetermined degree of humidity absorbs water from the air and is dissolved in said water, said immersion being carried out for a length of time sufficient for said solution to impregnate said fibrous material but insufficient for said solution to dissolve said adhesive to a substantial extent, after which the fibrous material is dried, and
    b) the impregnated and dried fibrous material is folded along at least one folding line, whereas
    c) the fibrous material is cut into strip form at any time before, during or after the steps set forth in items a and b above.

**Patentansprüche**

1. Ein Luftfeuchtigkeitsindikator der Art, bei der die Wirkung auf einer hygroskopischen Substanz beruht, die, wenn Luft mit zum mindesten einem vorherbestimmten Grad an Feuchtigkeit auf sie einwirkt, Wasser aus der Luft absorbiert und in genanntem Wasser aufgelöst wird, dadurch **gekennzeichnet**, dass die genannte hygroskopische Substanz getragen wird von einem Streifen (3) aus fibrösem Gewebematerial, z. Bsp. Papier, in dem die Fasern mittels eines Haftmittels, das mit Wasser aufgelöst oder weichgemacht werden kann, aneinander haften, wobei der genannte Streifen (3) nur an einem seiner Enden oder einer seiner Kanten befestigt (4) ist und zumindest eine scharfe Falte (5) zwischen genanntem Ende oder genannter Kante und dem entgegengesetzten freien Ende oder der entgegengesetzten freien Kante (10) umfasst, wobei auf genannte Falte oder Falten (5) zumindest in der Arbeitslage des Indikators eine Kraft einwirkt, die konstant in der Entfaltungsrichtung wirkt.

2. Ein Indikator gemäss Anspruch 1, dadurch **gekennzeichnet**, dass das fibröse Material feines Seidenpapier, Zigarettenpapier oder ähnliches ist.

3. Ein Indikator gemäss Anspruch 1 oder 2, dadurch **gekennzeichnet**, dass die genannte hygroskopische Substanz gewählt wird aus der Gruppe von Salzen, die umfasst anhydrisches Kupferchlorid, Kupferchloriddihydrat, Natriumchlorid, Ammoniumsulfat, Kaliumchlorid, Kaliumnitrat und Kaliumsulfat.

4. Ein Indikator gemäss einem oder einem beliebigen der Ansprüche 1-3, dadurch **gekennzeichnet**, dass der Streifen (3) mit einem seiner Enden oder einer seiner Kanten an der Innenseite einer Stirnwand (2) oder Seitenwand eines zumindest teilweise durchsichtigen Behälters (1) befestigt ist, dessen Länge oder Breite von gleicher Grössenordnung ist wie die Länge beziehungsweise Breite des Streifens in dessen entfaltetem Zustand.

5. Ein Indikator gemäss Anspruch 4, dadurch **gekennzeichnet**, dass der genannte Behälter (1) als ein an einem Ende geschlossenes Rohr ausgebildet ist, in dem ein Ende des Streifens (3) an der Innenseite des geschlossenen Endes (2) des Rohres befestigt ist.

6. Ein Indikator gemäss Anspruch 5, dadurch **gekennzeichnet**, dass sich der genannte Streifen (3) zuspitzt und an seinem breitesten Ende befestigt ist.

7. Ein Indikator gemäss Anspruch 6, dadurch **gekennzeichnet**, dass sich der Streifen (3) auf einen Punkt an seinem freien Ende (10) zuspitzt.

8. Ein Indikator gemäss einem oder einem beliebigen der Ansprüche 5-7, **gekennzeichnet** durch eine ringförmige Dichtung (7), die an der Aussenseite des Rohres angebracht ist oder an das offene Ende des Rohres angrenzt, wobei genannte Dichtung eine solche Form hat, dass sie, wenn das Rohr in eine kreisförmige Öffnung (9) in z. Bsp. einem Betonboden (8) eingesetzt wird, das Rohr gegen die Wand der Öffnung und/oder die Aussenfläche genannten Bodens (8) abdichtet.

9. Ein Indikator gemäss einem oder einem beliebigen der Ansprüche 1-8, dadurch **gekennzeichnet**, dass er so beschaffen ist, dass er luftdicht von der Umgebung abgedichtet werden kann, entweder durch einen Behälter (1), der mit einem feuchtigkeitsdichten Verschluss (6) versehen ist, oder durch einen Behälter (1), der in einem feuchtigkeitsdichten Beutel, einer feuchtigkeitsdichten Packung oder einem feuchtigkeitsdichten Behälter angebracht ist, der geöffnet werden kann, ohne den Feuchtigkeitsindikator zu beschädigen, und der ein Trockenmittel enthalten kann, z. Bsp. Kieselgel.

10. Ein Verfahren zur Herstellung eines feuchtigkeitsempfindlichen Streifens (3) zur Anwendung in einem Indikator gemäss einem oder einem beliebigen der Ansprüche 1-9, **gekennzeichnet** durch die folgenden Schritte a-c:
   a) fibröses Gewebematerial, z. Bsp. Papier, der Art, in der die Fasern mittels eines Haftmittels, das durch Wasser aufgelöst oder weichgemacht werden kann, aneinander haften, wird getaucht in eine Lösung einer hygroskopischen Substanz der Art, die, wenn Luft mit zumindest einem vorherbestimmten Grad an Feuchtigkeit in ihrem trockenen Zustand auf sie einwirkt, Wasser aus der Luft absorbiert und in genanntem Wasser aufgelöst wird, wobei das Eintauchen zeitlich ausreichend lange vorgenommen wird, dass die genannte Lösung das genannte fibröse Material imprägnieren kann, aber zeitlich unzureichend lang für die genannte Lösung, das genannte Haftmittel in wesentlichem Grad auflösen zu können, wonach das fibröse Material getrocknet wird, und
   b) das imprägnierte und getrocknete fibröse Material wird entlang zumindest einer Faltlinie gefaltet, wobei
   c) das fibröse Material zu einem beliebigen Zeitpunkt vor den, während der oder nach den vorstehend unter Punkt a und b dargelegten Schritten in Streifenform geschnitten wird.

## Revendications

1. Un indicateur d'humidité d'air de la sorte dans laquelle l'effet est basé sur une substance hygroscopique qui, par l'action de l'air sur celle-ci avec au moins un degré d'humidité déterminé d'avance, absorbe l'eau de l'air et est dissoute dans l'eau, caractérisé par le fait que ladite substance hygroscopique est portée par une bande (3) d'une matière tissue fibreuse, par exemple le papier, dans laquelle les fibres adhèrent l'un à l'autre par un adhésive qui peut être dissous ou amolli par l'eau, ladite bande (3) étant fixée (4) seulement à l'une de ses extrémités ou de ses bords et comprenant au moins un pli aigu (5) entre ladite extrémité ou ledit bord et l'extrémité ou le bord libre opposé(e) (10), le ou les plis (5) au moins dans la direction opérative de l'indicateur étant actioné(s) par une force qui agisse constamment dans la direction dépliante.

2. Un indicateur selon la revendication 1, caractérisé par le fait que la matière fibreuse est le papier de soie fin, le papier à cigarette ou analogues.

3. Un indicateur selon la revendication 1 ou 2, caractérisé par le fait que ladite substance hygroscopique est choisie du groupe de sels comprenant chlorure de cuivre anhydre, dihydrate de chlorure de cuivre, chlorure de sodium, sulfate d'ammonium, chlorure de potassium, nitrate de potassium et sulfate de potassium.

4. Un indicateur selon quelconque des revendications 1-3, caractérisé par le fait que la bande (3) avec une de ses extrémités ou bords est fixée à l'intérieur d'une paroi terminale (2) ou d'une paroi latérale d'un réservoir (1) qui est au moins partiellement transparent, dont la longueur ou la largeur est du même ordre de grandeur que la longeur ou la largeur respectivement de la bande dans l'état dépliant de celle-ci.

5. Un indicateur selon la revendication 4, caractérisé par le fait que ledit réservoir (1) est formé comme un tube fermé à une extrémité, dans lequel une extrémité de la bande (3) est fixée à l'intérieur de l'extrémité fermée (2) du tube.

6. Un indicateur selon la revendication 5, caractérisé par le fait que la bande (3) est rendue conique, étant fixée à son extrémité la plus large.

7. Un indicateur selon la revendication 6, caractérisé par le fait que la bande (3) est rendue conique jusqu'à un point à son extrèmité libre (10).

8. Un indicateur selon quelconque des revendications 5-7, caractérisé par une garniture annulaire (7) située sur l'extérieur du tube à ou près de l'extrémité ouverte de celui-ci, la garniture ayant une telle forme que quand le tube est inséré dans une ouverture circulaire (9), par exemple dans un plancher de béton (8), elle étanche le tube contre la paroi de l'ouverture et/ou contre la surface externe du plancher (8).

9. Un indicateur selon quelconque des revendications 1-8, caractérisé par le fait qu'il est adapté à être scellé d'une manière étanche à l'air, soit par le réservoir (1) étant pourvu d'une fermeture (6) étanche à l'humidité et démontable, ou par le réservoir (1) étant situé dans un sac, un colis ou un réservoir étanche à l'humidité, qui peut être ouvert sans détériorer l'indicateur d'humidite et qui peut contenir un agent sécheur, par exemple gel de silice.

10. Procédé de préparation d'une bande sensitive à l'humidité pour application dans un indicateur selon quelconque des revendications 1-9, caractérisé par les étapes a-c suivantes:
a) une matière tissue fibreuse, par exemple le papier, d'une sorte dans laquelle les fibres adhèrent l'un à l'autre par un adhésive qui peut être dissous ou amolli par l'eau, est immergée dans une solution d'une substance hygroscopique d'une telle sorte qui, par l'action de l'air sur celle-ci dans son état sec avec un degré d'humidité déterminé d'avance, absorbe l'eau de l'air et est dissoute dans l'eau, l'immersion étant conduite d'une période de temps suffisante pour que la solution puisse impregner la matière fibreuse, mais insuffisante pour que la solution puisse dissoudre l'adhésive à un degré essentiel, après quoi la matière fibreuse est sechée, et
b) la matière impregnée et sechée est pliée le long au moins une ligne pliante, tandis que
c) la matière fibreuse est coupée en forme de bande à une époque quelconque avant, pendant ou après les étapes indiquées sous les points a et b en haut.

Fig.1

Fig.2

Fig.3